# EUROPEAN PATENT APPLICATION

(11) **EP 1 729 007 A2**
(43) Date of publication of application: **06.12.2006**
(21) Application number: 06380143.5
(22) Date of filing: 30.05.2006
(51) Int. Cl.: F03D 11/04

(54) **Tower for wind energy turbines**

(30) Priority: 03.06.2005 ES 200501340
(71) Applicant: Gamesa Eolica, S.A.U., 31013 Pamplona (ES)
(72) Inventor: Llorente Gonzales, Jose Ignacio, 31013 Pamplona (Navarra) (ES)

(57) **Abstract**

Tower (1) for wind turbines having a deflectable rotor blade, comprising an upper tubular part (2), conical or cylindrical shape, which support the nacelle (5) and which extends along the rotor blade sweeping area, a lower lattice part (3) and a connection piece (7) between them.

## Description

### FIELD OF THE INVENTION

The invention relates to a tower structure for wind energy turbines and in particular for large wind turbines.

### BACKGROUND

The development and innovation of wind turbines during the past two decades have resulted in the growth of size and power of turbines. This implies an increase in the tower heights, weight and loads acting on the wind turbine tower. That is why wind turbine towers have to be stiffer and stronger, which consequently leads to bigger tower dimensions (height and diameter). This growth in tower dimensions causes inland transport problems as well as interference problems between the rotor blade and the tower structure due to the conflict between the blade deflections and the increased diameters of the towers.

Some known proposals for wind turbine towers are the following.

DE 10206242 discloses a complete lattice tower with at least three mast legs for a wind turbine.

DE 10230273 discloses a wind turbine tower with a lower conical concrete section and an upper cylindrical steel section with a connection device between both.

WO 9739240 discloses a chimney system in which is embedded a wind turbine tower taking advantage in this way of the height of the chimney.

WO 2004031578 describes a modular system for wind turbine towers in which different parts of steel tubes of different sections, conical and cylindrical, are adapted.

These proposal does not solve the problems referred above, in particular the interference problem between the blades and the tower which can cause severe damages.

### SUMMARY OF THE INVENTION

The present invention comes to solve the above-mentioned problems and limitations, providing an hybrid structure for wind turbine towers with an upper tubular (conical or cylindrical) part which avoids interference between blades and tower and that can be made complying with the limitations of weight and dimensions required for inland transport, and a lower lattice part having the required strength at the bottom of the tower.

Said upper tubular part supports the nacelle of the wind turbine and extends along the rotor blade sweeping area providing a tower of a reduced diameter in this area to prevent collision between the rotor blade and the tower when the rotor blade deflects under the wind load.

In addition, the invention provides a connection piece to which the tubular and the lattice parts are joined.

These and other characteristics and advantages of the invention will become more apparent from the detailed description of the embodiments of the invention given below for illustrative and non-limiting purposes, with reference to the accompanying drawings.

### BRIEF DESCRIPTION OF DRAWINGS

Figure 1 is a schematic view of the tower structure according to this invention.
Figure 2 is a perspective view of the intersection between the tubular and
lattice parts of the tower including a connection piece.
Figure 3 is an horizontal section of the connection piece.
Figure 4 shows a magnified view of part C of Fig. 3.

### DETAILED DESCRIPTION OF PREFERRED EMBODIMENTS

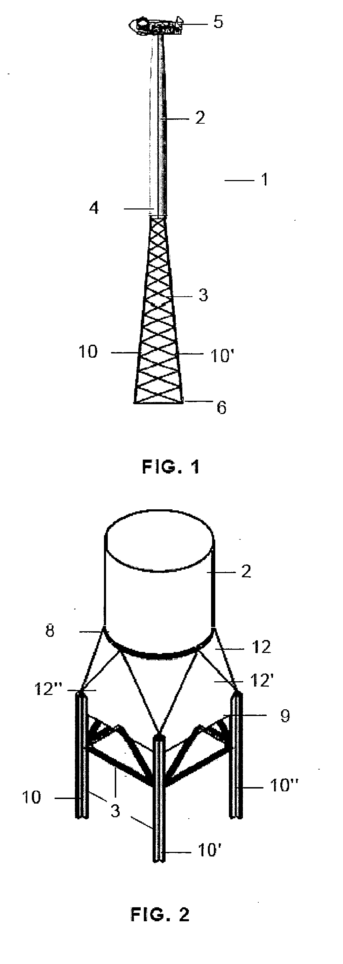

As shown in Figure 1, the tower 1 for wind energy turbines according to the invention comprises an upper tubular part 2, preferably made of steel and of conical or cylindrical shape, supporting the nacelle 5 of the wind turbine and a lower part of lattice structure 3 preferably made of steel.

This design is specially suitable for big wind turbines of more than 2,5 MW with a rotational speed of more than 15 rpm.

On the upper tubular part 2 of the tower 1 the diameter of said tower 1 is limited by the demand of clearance between the tower 1 and the rotor blade (not shown), in order to avoid collisions between them. The deflection of the rotor blade will bend these blades towards the tower 1, specially at the blade tip area 4. This is the reason why there is a maximum allowable diameter of said tower 1 in this area 4.

The dimension of the diameter of the tubular section 2 would preferably be in the range of 3-6 m.

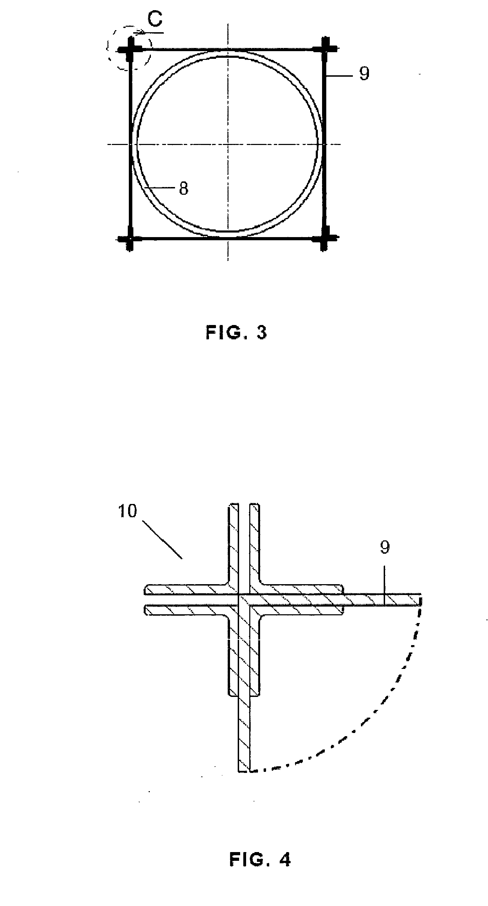

Below the rotor blade sweeping area, there is no need of a tower of a reduced diameter. According to the invention this lower part 3 is a lattice structure, preferably of rectangular or squared section of 4-8 m. at the top, having four legs 10, 10', 10", 10''' made of 4 beams of L shape as shown in Fig. 4.

The top section of the tubular part 2 will be tighter compared to the lattice part 3. In the same way, the top part of the lattice structure 3 will be tighter than the bottom part 6, making easier the connections between the tower sections. On the bottom part 6 of the lattice structure 3, the distance between legs 10, 10', 10", 10'" according to the invention reduces foundation stress, avoiding the demand of heavy steel plates or concrete that would require a tubular tower.

According to the present invention, the connection between the tubular part 2 and the lattice structure 3 is made by means of a connection piece 7 which is an assembly of several elements 12, 12', 12" defining an upper circular joining section 8 with the tubular part 2 and a lower squared joining section 9 with the lattice part 3.

This design has the advantage that the connection peace is leading the force directly into the center of the lattice structure. Further this connection works as a double sided connection, and therefore allows for a reduced number of bolts in the joints.

Figs. 2 and 3 show a connection piece in which the diameter of the circular joining section 8 tower is equal to the with of the squared joining section 9 but the squared section can be wider than the circular section.

The tubular part 2 is expected to be fitted to the connection peace 7 either by means of a flanged connection, welding together the two sections either on site or in the workshop, of eventually by means of a fishplate connection.

Although the present invention has been fully described in connection with preferred embodiments, it is evident that modifications may be introduced within the scope thereof, not considering this as limited by these embodiments, but by the contents of the following claims.

## Claims

1. Tower (1) for wind energy turbines having a deflectable rotor blade **characterized by** comprising an upper tubular part (2) supporting the nacelle (5), a lower lattice part (3) and a connection piece (7) between them, wherein the tubular part (2) extends along the rotor blade sweeping area.

2. Tower (1) for wind energy turbines, according to claim 1, wherein the tubular part (2) has a cylindrical or conical shape.

3. Tower (1) for wind energy turbines, according to claims 1 or 2, wherein the lattice part (3) has a squared shape.

4. Tower (1) for wind energy turbines, according to claim 3, wherein the connection piece (7) is an assembly of several elements (12, 12', 12") defining an upper circular joining section (8) with the tubular part (4) and a lower squared joining section (9) with the lattice part (3).

5. Tower (1) for wind energy turbines, according to claim 4, wherein the lattice part (3) has four legs (10, 10', 10", 10''') made of four profiles in L-shaped joined in cross shaped, leaving between them a space (15) to receive the base (9) of the connexion piece (7).
